Europäisches Patentamt

European Patent Office

Office européen des brevets

(11) Veröffentlichungsnummer: **0 291 946 B1**

# EUROPÄISCHE PATENTSCHRIFT

(45) Veröffentlichungstag der Patentschrift:
05.09.90

(51) Int. Cl.⁵: **B09B 1/00**

(21) Anmeldenummer: 88107930.5

(22) Anmeldetag: 18.05.88

(54) **Verfahren zur Einbringung von umweltgefährdenden Abfällen in unterirdische Hohlräume.**

(30) Priorität: 20.05.87 DE 3716851

(43) Veröffentlichungstag der Anmeldung:
23.11.88 Patentblatt 88/47

(45) Bekanntmachung des Hinweises auf die Patenterteilung:
05.09.90 Patentblatt 90/36

(84) Benannte Vertragsstaaten:
DE FR GB

(56) Entgegenhaltungen:
DE-A- 1 924 942
DE-A- 2 225 664
DE-A- 3 141 884
US-A- 2 942 424

(73) Patentinhaber: Nukem GmbH, Rodenbacher Chaussee 6 Postfach 11 00 80, D-6450 Hanau 11(DE)

(72) Erfinder: Brähler, Georg, Dr., Barbarossastrasse 17, D-6463 Freigericht 1(DE)
Erfinder: Ganser, Benno, Dr., Taunusstrasse 6, D-8755 Alzenau-Wasserlos(DE)
Erfinder: Maurer, Paul-Gerhard, Dr., Bergstrasse 1, D-6451 Neuberg 2(DE)

## Beschreibung

Gegenstand der Erfindung ist ein Verfahren zur Einbringung von umweltgefährdenden festen oder schlammförmigen Abfällen sowie von Gemischen aus festen, schlammförmigen oder flüssigen Abfällen mit Bindemitteln in unterirdische, mit Wasser oder Salzsole gefüllte Hohlräume.

Die Einlagerung von umweltgefährdenden Abfällen in oberirdischen Deponien wird zunehmend erschwert und ist zudem problematisch. Gründe dafür sind die weitgehende Erschöpfung dazu geeigneter vorhandener Deponien, der Zutritt von Niederschlägen, der aufwendige Schutz zur Vermeidung von Grundwasserverunreinigung sowie die Problematik der Langzeitintegrität sowohl der konditionierten Abfälle als auch der oberirdischen Deponien selbst.

Eine Alternative stellt das Einbringen von Abfällen in unterirdische Hohlräume geeigneter geologischer Formationen dar.

Wie Untersuchungen zur Endlagerung von radioaktiven Abfällen beispielsweise in Salzstöcken zeigen, ist hier eine ausreichend lange Stabilität zu erwarten. Solche Hohlräume können mit festen Abfällen oder auch geeigneten Schlämmen verfüllt werden, eine andere Möglichkeit ist das Einbringen von festen, schlammförmigen oder auch flüssigen Abfällen nach Vermischen mit einem geeigneten Bindemittel, wie Zement, Flugasche aus Kohlkraftwerken oder Gips. Eine Verfestigung dieser Gemische kann dann unterirdisch geschehen. In Salzstöcken können Hohlräume, sogenannte Kavernen, entweder durch mechanischen Salzabbau oder durch Herauslösen von Salz mit Wasser hergestellt werden. Solche Kavernen werden z. B. zur Bevorratung von Erdöl genutzt.

Solche, mit Wasser beziehungsweise Salzsole gefüllten Kavernen in Salzformationen oder anderen geeigneten geologischen Formationen sind für das Einbringen von wasserlöslichen Abfällen oder noch nicht erhärteten Abfall-Bindemittel-Gemischen nicht geeignet, da Schadstoffe in Wasser bzw. Sole übertreten können und wieder entfernt werden müssen und Gemische mit Bindemitteln unter Wasser nicht die erforderlichen mechanischen Eigenschaften erreichen.

Der vorliegenden Erfindung lag daher die Aufgabe zu Grunde, ein Verfahren zur Einbringung von umweltgefährdenden festen oder schlammförmigen Abfällen sowie von Gemischen aus festen, schlammförmigen oder flüssigen Abfällen mit Bindemitteln in unterirdische, mit Wasser oder Salzsole gefüllte Hohlräume zu schaffen, bei dem das einzubringende Gut während des Befüllvorganges gegenüber Wasser- bzw. Soleeinwirkung geschützt ist, ohne den Hohlraum vor Inbetriebnahme entleeren zu müssen.

Diese Aufgabe wurde erfindungsgemäß dadurch gelöst, daß das Wasser oder die Salzsole mit einer spezifisch schwereren, mit Wasser oder Salzsole nicht mischbaren Flüssigkeit unterschichtet werden, daß die Abfälle bzw. die Gemische aus Abfall und Bindemitteln über eine Förderleitung in die mit Wasser oder Salzsole nicht mischbare Flüssigkeit eingebracht werden, wobei die Dichte der Abfälle bzw. der Gemische aus Abfall und Bindemitteln größer sein muß als die der mit Wasser oder Salzsole nicht mischbaren Flüssigkeit, und daß das durch das Befüllen mit Abfall verdrängte Wasser oder die verdrängte Salzsole nach oben abgezogen werden.

Als besonders geeignet haben sich als mit Wasser bzw. Salzsole nicht mischbare Flüssigkeiten Chlorfluorkohlenwasserstoffe erwiesen.

Anhand der schematischen Abbildung soll das erfindungsgemäße Verfahren näher erläutert werden.

In einer geeigneten geologischen Formation, z. B. in einem Salzdom, befindet sich ein mit Salzsole (2), Dichte 1,25 g/cm³, gefüllter kavernenartiger Hohlraum (1). Durch ein Bohrloch (3) wird eine spezifisch schwerere, mit der Salzsole (2) nicht mischbare Flüssigkeit (5) eingefüllt, die die Salzsole (2) unterschichtet. Die Menge der Flüssigkeit (5) ist sowohl der Hohlraumgeometrie als auch der Geometrie der später einzubringenden Abfallkonfiguration so angepaßt, daß zwischen der Abfallkonfiguration und der überstehenden Sole (2) ein ausreichender Überstand der Flüssigkeit (5) sichergestellt ist. Als Flüssigkeit (5) sind z. B. Chlorkohlenwasserstoffe und Fluorkohlenwasserstoffe entsprechender Dichte wegen ihrer günstigen Eigenschaften geeignet.

Besonders vorteilhaft ist es, wenn als mit Wasser oder Salzsole nicht mischbare Flüssigkeit Chlorfluorkohlenwasserstoffe mit Dichten von etwa 1,3 - 1,6 g/cm³ als Absperrmedium verwendet werden, da sie wegen ihrer breiten industriellen Anwendung günstig beschafft werden können.

Nach der Unterschichtung wird über eine Förderleitung (4), die durch das Bohrloch (3) beweglich geführt ist und deren unteres Ende in die Flüssigkeit (5) eintaucht, eine Mischung (6) aus bioschädlichem Abfall und Bindemitteln, z. B. mit einer Dichte größer 2 g/cm³, in den Hohlraum (1) eingefüllt. Die dabei verdrängte Salzsole (2) wird nach oben durch das Bohrloch (3) abgezogen, z. B. abgepumpt. Entsprechend dem durch die Abfallzuführung ansteigendem Niveau der Flüssigkeit (5) wird die Förderleitung (4) nach oben geführt, sodaß ihr unteres Ende auch bei fortschreitender Abfallbefüllung stets in die absperrende Flüssigkeit (5) eintaucht. Die Führung der Förderleitung (4) kann über Meßeinrichtungen erfolgen.

Die im Falle der Verfestigung mit Bindemitteln entstehende geringfügige Wärme wird über die Sole (2) bzw. das Wasser bzw. den bereits eingelagerten Abfall und die umgebende geologische Formation so abgeführt, daß sich der Dampfdruck der Sperrflüssigkeit (5) nicht nachteilig erhöhen kann.

Nach Verfüllung des Hohlraumes (1) wird die restliche Flüssigkeit abgepumpt und das Bohrloch verschlossen.

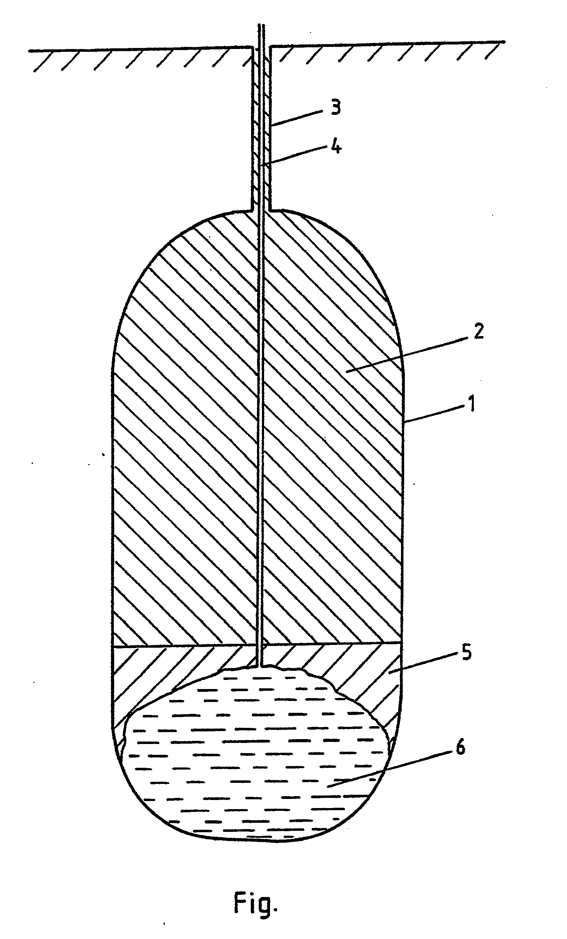

## Patentansprüche

1. Verfahren zur Einbringung von umweltgefährdenden festen oder schlammförmigen Abfällen sowie von Gemischen (6) aus festen, schlammförmigen oder flüssigen Abfällen mit Bindemitteln in unterirdische, mit Wasser oder Salzsole gefüllte Hohlräume (1), dadurch gekennzeichnet, daß das Wasser oder die Salzsole (2) mit einer spezifisch schwereren, mit Wasser oder Salzsole nicht mischbaren Flüssigkeit (5) unterschichtet werden, daß die Abfälle bzw. die Gemische (6) aus Abfall und Bindemitteln über eine Förderleitung (4) in die mit Wasser oder Salzsole nicht mischbare Flüssigkeit (5) eingebracht werden, wobei die Dichte der Abfälle bzw. der Gemische (6) aus Abfall und Bindemitteln größer sein muß als die der mit Wasser oder Salzsole nicht mischbaren Flüssigkeit (5), und daß das durch das Befüllen mit Abfall verdrängte Wasser oder die verdrängte Salzsole (2) nach oben abgezogen werden.

2. Verfahren nach Anspruch 1, dadurch gekennzeichnet, daß als mit Wasser oder Salzsole nicht mischbare Flüssigkeit (5) Chlorfluorkohlenwasserstoffe verwendet werden.

**Claims**

1. A process for the introduction of environmentally hazardous, solid or sludge-like wastes and mixtures (6) of solid, sludge-like or liquid wastes with binders into underground cavities (1) filled with water or brine solution, characterized in that a liquid of relatively high specific gravity immiscible with water or brine solution is added to form a layer beneath the water or the brine solution (2), in that the wastes or the mixtures (6) of waste and binders are introduced through a feed pipe (4) into the liquid (5) immiscible with water or brine solution, the density of the wastes or of the mixtures (6) of waste and binders having to be higher than that of the liquid (5) immiscible with water or brine solution and in that the water displaced by filling with waste or the displaced salt brine (2) is removed upwards.

2. A process as claimed in claim 1, characterized in that chlorofluorocarbons are used as the liquid (5) immiscible with water or brine.

**Revendications**

1. Procédé pour introduire des déchets dangereux pour l'environnement, solides ou sous forme de boues, ainsi que des mélanges (6) de déchets solides, sous forme de boues ou liquides avec des liants dans des espaces creux (1) sous terre, remplis d'eau ou d'eau salée, caractérisé en ce que sous l'eau ou l'eau salée (2), une couche de base est créée en envoyant un liquide (5) spécifiquement plus lourd, non miscible avec l'eau ou l'eau salée, en ce que les déchets ou les mélanges de déchet et de liants sont introduits dans le liquide (5) non miscible avec l'eau ou l'eau salée, la densité des déchets ou des mélanges (6) de déchet et de liants devant être plus grande que celle du liquide non miscible avec l'eau ou l'eau salée, et en ce que l'eau ou l'eau salée (2) délogée par le remplissage avec du déchet est repoussée vers le haut.

2. Procédé selon la revendication 1, caractérisé en ce qu'on peut utiliser des hydrocarbures chlorofluorés comme liquide (5) non miscible avec l'eau ou l'eau salée.

Fig.